# EUROPÄISCHE PATENTSCHRIFT

(11) **EP 3 185 983 B1**
(45) Veröffentlichungstag und Bekanntmachung des Hinweises auf die Patenterteilung: **25.07.2018**
(21) Anmeldenummer: 15757202.5
(22) Anmeldetag: 26.08.2015
(51) Int. Cl.: B01D 39/16, B01D 17/04

(54) **ENDABSCHEIDER, VERWENDUNG UND HERSTELLUNGSVERFAHREN**
FINAL SEPARATOR, USE AND METHOD OF MANUFACTURING
MOYEN DE FILTRAGE TERMINAL, UTILISATION ET PROCÉDÉ DE PRÉPARATION

(30) Priorität: 26.08.2014 DE 102014216979
(43) Veröffentlichungstag der Anmeldung: 05.07.2017
(73) Patentinhaber: Mahle International GmbH, 70376 Stuttgart (DE)
(72) Erfinder: RENZ, Birgit, 71672 Marbach (DE); KOPPI, Peter, A-9412 Sankt Margarethen (AT); KOLLMANN, Mathias, A-9182 Maria Elend (AT); SANTER, Julia, A-9100 Völkermarkt (AT)
(74) Vertreter: BRP Renaud & Partner mbB Rechtsanwälte Patentanwälte Steuerberater
(86) Internationale Anmeldenummer: PCT/EP2015/069479
(87) Internationale Veröffentlichungsnummer: WO 2016/030398

(56) Entgegenhaltungen:
- EP-A1- 1 366 791
- WO-A1-2014/037205
- WO-A2-2009/018463
- US-A- 5 904 956

## Beschreibung

Die vorliegende Erfindung betrifft einen Endabscheider für eine Endabscheidereinrichtung, mit einem Filterkörper, der von einem Fluid durchströmbar ist, aus dem Wasser abgeschieden werden soll. Die Erfindung betrifft außerdem eine Endabscheidereinrichtung, die mit wenigstens einem derartigen Endabscheider ausgestattet ist. Die Erfindung betrifft auch die Verwendung des Endabscheiders als Filter zum Abscheiden von Verunreinigungen aus einer von Wasser verschiedenen Flüssigkeit, sowie das Herstellungsverfahren des Endabscheiders.

Filtereinrichtungen werden in zahlreichen Anwendungen eingesetzt, um unterschiedliche Fluide von darin mitgeführten festen und/oder flüssigen Verunreinigungen zu reinigen. Sofern Wasser aus einer Flüssigkeit, die von Wasser verschieden ist, abgeschieden werden soll, kommen Endabscheidereinrichtungen zum Einsatz. Dies funktioniert vor allem dann, wenn das Wasser mit der jeweiligen anderen Flüssigkeit als Dispersion vorliegt. Dabei ist das Wasser regelmäßig in Form sehr kleiner Tröpfchen in der anderen Flüssigkeit verteilt, so dass das Wasser als disperse Phase vorliegt, während die andere Flüssigkeit ein Dispersionsmedium bildet.

Eine Endabscheidereinrichtung ist im vorliegenden Zusammenhang demnach eine Filtereinrichtung, die zumindest zum Abscheiden von Wasser aus einer anderen Flüssigkeit geeignet ist. WO 2009/018463 A2 offenbart einen Abscheider zum Abtrennen von Wasser aus einer von Wasser verschiedenen Flüssigkeit, insbesondere aus einem Öl-oder Kraftstoffstrom, mit einem für die Flüssigkeit durchströmbaren Filterkörper, der aus einem zellulosefaserhaltigen Filtermaterial hergestellt sein kann, wobeider Filterkörper eine erste Seite und eine von der ersten Seite abgewandte zweite Seite aufweist und - auf der ersten Seite eine Nanofaserschicht aufgebracht ist, die hydrophob ausgestaltet ist und im Einbauzustand eine Rohseite des Filterkörpers bildet.

Sehr häufig sind derartige Endabscheidereinrichtungen mit einer koaleszierenden Filtereinrichtung kombiniert. Insbesondere kann ein vom Fluid durchströmbarer Endabscheider, der sich zum Abscheiden von Wasser aus dem jeweiligen Fluid eignet, gleichzeitig als Filter wirken. Von besonderem Interesse sind dabei insbesondere Fahrzeuganwendungen. Hierzu weist eine solche Endabscheider- und/oder Filtereinrichtung üblicherweise ein Filterelement auf, welches vom jeweiligen Fluid durchströmbar ist und dabei das Fluid filtert bzw. von Verunreinigungen, Schmutzpartikeln und dergleichen trennt und dabei gegebenenfalls eine Abscheidung von Wasser bewirkt. Ein derartiges Filterelement kann zur Reinigung einer Flüssigkeit, insbesondere von Öl oder Kraftstoff, eingesetzt werden. Der Endabscheider weist hierbei einen vom jeweiligen Fluid durchströmbaren Filterkörper auf, der aufgrund seiner strukturellen Ausbildung bzw. physikalischen und/oder chemischen Eigenschaften die Abscheidung von Wasser aus dem Fluid und insbesondere die Filterung des Fluids erlaubt. Der Filterkörper kann aus zumindest einem durchströmbaren Filtermaterial ausgebildet sein bzw. zumindest ein solches Filtermaterial aufweisen, welches insbesondere besagte strukturelle, physikalische und/oder chemische Eigenschaften aufweist. Zudem ist es prinzipiell vorstellbar, den Filterkörper bzw. das Filtermaterial mit Poren zu versehen bzw. einen Poren aufweisenden Filterkörper zu wählen, um eine Durchströmung des Fluids durch den Filterkörper hindurch zu ermöglichen und dabei Wasser abzuscheiden sowie gegebenenfalls Verunreinigungen bzw. Schmutzpartikel aus dem Fluid auszusieben bzw. zu filtern.

Die vorliegende Erfindung beschäftigt sich mit dem Problem, für einen Endabscheider der eingangs genannten Art eine verbesserte oder zumindest andere Ausführungsform anzugeben, die sich insbesondere durch eine effiziente Abscheidewirkung für Wasser auszeichnet. Zudem soll eine preisgünstige Herstellung gewährleistet sein.

Das genannte Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das durchströmbare Filtermaterial anströmseitig mit einer Nanofaserschicht zu versehen. Die Erfindung nutzt hierbei die Erkenntnis, dass z.B. in einer Öl-Wasser-Dispersion das Öl als Dispersionsmedium die Nanofaserschicht nahezu ungestört durchdringt, während das Wasser als fein verteilte disperse Phase von der Nanofaserschicht abgehalten wird. Erklärt wird dies mit hohen Kapillarkräften der Nanofasern für Wasser. Hierdurch bewirkt die Nanofaserschicht zunächst eine Abtrennung des Wassers aus der Öl-Wasser-Dispersion. Das so abgeschiedene Wasser kann nun an bzw. in der Nanofaserschicht zurück- bzw. abtransportiert werden.

Dieser für Wasser abscheidend wirkende Effekt kann dadurch verstärkt werden, dass die Nanofaserschicht des Endabscheiders hydrophob ausgestaltet ist, somit erfolgt die Abtrennung des zuvor koaleszierten Wassers aus der Öl-Wasser-Dispersion. Gemäß der Erfindung erweisen sich Varianten der hydrophoben Ausgestaltung der Nanofaserschicht bei denen die Nanofaserschicht zum Ausgestalten der hydrophoben Eigenschaft und/oder zum Verbessern bzw. Steigernder hydrophoben Eigenschaft behandelt vorbehandelt ist. Die Behandlung kann dabei nach dem Erzeugen der Nanofaserschicht oder vor dem Erzeugen der Nanofaserschicht erfolgen. Im letztgenannten Fall werden also die Nanofaserschicht bildende Nanofaser entsprechend behandelt.

Vorstellbar ist es dabei, die Nanofaserschicht chemisch zu behandeln. Vorstellbar ist es auch, die Nanofaserschicht mit elektromagnetischen Strahlen und/oder Teilchenstrahlen zu behandeln. Die Behandlung erfolgt dabei derart, dass die Nanofaserschicht durch eine Aktivierung mit der hydrophoben Eigenschaft zu versehen oder die hydrophobe Eigenschaft der Nanofaserschicht erhöht wird. Diese Aktivierung erfolgt insbesondere durch eine Erhöhung der Bindungsneigung der Nanofaserschicht für Wasser.

Als besonderes vorteilhaft erweist sich eine Ausführungsform, bei der die Nanofaserschicht zur hydrophoben Ausgestaltung mit Plasma behandelt wird. Das heißt, dass zum Versehen der Nanofaserschicht mit der hydrophoben Eigenschaft und/oder zum Steigern der hydrophoben Eigenschaft der Nanofaserschicht Plasma zum Einsatz kommt. Die Plasmabehandlung der Nanofaserschicht erlaubt dabei eine besonders effektive Art der hydrophoben Ausgestaltung der Nanofaserschicht, insbesondere eine besonderes effektive Art der Aktivierung der Nanofaserschicht.

Bevorzugt erfolgt die Behandlung der Nanofaserschicht zerstörungsfrei, derart dass die Nanofaserschicht durch die Behandlung nicht oder zumindest in verringertem Maße beschädigt wird. Hierdurch lassen sich die vorteilhaften Eigenschaften der Nanofaserschicht bzw. der zugehörigen Nanofaser trotz der Behandlung zumindest weitestgehend erhalten.

Die Nanofaserschicht kann prinzipiell unmittelbar auf dem Filterkörper aufgebracht sein.

Vorteilhaft ist eine Ausführungsform, bei welcher der Endabscheider auf der Rohseite eine Nanofaserlage bzw. eine Nanofaserschicht besitzt und dahinterliegend eine für die Nanofaser benötigte Trägerschicht liegt. Die Trägerschicht kann dabei weniger hydrophob gestaltet sein als die Nanofaserschicht. Die Trägerschicht kann dabei aus einem Cellulosematerial bzw. einem vollsynthetischen Fasermaterial bestehen. Die Nanofaserschicht kann also auf der Trägerschicht aufgebracht sein, wobei die Trägerschicht auf dem Filterkörper aufgebracht ist. Eine solche Trägerschicht findet insbesondere dann Einsatz, wenn die Nanofaserschicht bzw. die zugehörigen Nanofaser keine ausreichende Haftung am Filterkörper aufweisen. Die Trägerschicht dient also insbesondere dem Zweck, eine bessere Haftung der Nanofaserschicht am Filterkörper zu ermöglichen.

Das Aufbringen der Nanofaserschicht auf der Trägerschicht kann auf beliebige Art erfolgen. Denkbar ist es, die Trägerschicht in einem Bad mit die Nanofaserschicht ausbildende Nanofaser zu tauchen. Denkbar ist es auch, dass die Trägerschicht mit der Nanofaserschicht beschichtet ist. Dabei kann die Trägerschicht mit Nanofasern der Nanofaserschicht besprüht sein, so dass die Nanofaserschicht auf der Trägerschicht aufgesprüht ist.

Die Behandlung der Nanofaserschicht mit der Strahlung und/oder mit Plasma kann dabei vor dem Aufbringen der Nanofaserschicht auf dem Filterkörper und/oder nach dem Aufbringen der Nanofaserschicht auf dem Filterkörper erfolgen. Das heißt insbesondere, dass die mittels der Trägerschicht am Filterkörper angebrachte Nanofaserschicht samt Trägerschicht behandelt und anschließend am Filterkörper angebracht werden kann. Das heißt auch, dass die Nanofaserschicht vor dem Aufbringen auf die Trägerschicht behandelt wird. Hierzu werden die Nanofaser der Nanofaserschicht, insbesondere mit Plasma, behandelt.

Besonders vorteilhaft ist eine Ausführungsform, bei welcher der Endabscheider eine Rillierung aufweist. Diese Rillierung hilft das abzuscheidende Wasser in einen Wassersammelraum zu leiten. Vorteilhafterweise weist die Rillierung einen Winkel von 0° - 90 ° auf. Dabei weist die Rillierung idealerweise in dieselbe Richtung wie eine quer zum Endabscheider geführte Strömung des abgeschiedenen Wassers oder erzeugt erst diese Querströmung, um den Abtransport der abgeschiedenen Wassertröpfchen vom Endabscheider in den Wassersammelraum zu unterstützen.

Vorteilhaft verläuft die Rillierung in dieselbe Richtung wie eine quer zum Endabscheider geführte Strömung der Emulsion aus Wasser und Öl bzw. aus Wasser und Kraftstoff oder erzeugt erst diese Querströmung. Hierdurch wird insbesondere ein verbesserter Abtransport der abgeschiedenen Wassertröpfchen vom Endabscheider in den Wassersammelraum erreicht.

Die Rillierung kann auch in einem anderen Winkel relativ zur Strömung der Emulsion verlaufen. Bevorzugt ist es, wenn die Rillierung quer zur Strömung der Emulsion verläuft. Dies führt zu Turbulenzen an der Oberfläche des Endabscheiders und verbessert somit insbesondere die Koaleszenzeigenschaften des Endabscheiders, die insbesondere zu einer verbesserten Filterwirkung durch den Endabscheider führt.

Die Rillierung führt zudem insbesondere dazu, dass der Aufprallwinkel des Wassers auf den Endabscheider verändert wird. Das heißt, dass das Wasser bzw. Wassertröpfchen bedingt durch die Rillierung in einem Winkel anders als 90° auf den Endabscheider treffen. In anderen Worten: durch die Rillierung wird ein senkrechter Aufprall des Wassers bzw. der Wassertröpfchen auf den Endabscheider vermieden oder zumindest reduziert. Hierdurch lässt sich insbesondere die koaleszierende Eigenschaft des Endabscheiders für Wasser und somit die Koaleszenz des Endabscheiders verbessern.

Die Rillierung verbessert also insbesondere die Querströmung des Wassers bzw. erzeugt die Querströmung und führt zu einer verbesserten Koaleszenz des Endabscheiders.

Die Rillierung des Endabscheiders ist bevorzugt am Filterkörper realisiert. Das heißt, dass der Filterkörper die Rillierung aufweist. Alternativ oder zusätzlich kann die Nanofaserschicht die Rillierung aufweisen.

Das Versehen des Endabscheiders mit einer Nanofaserschicht führt einerseits zu verbesserten Abscheidewerten und andererseits auch zu verbesserten Filtereigenschaften des Endabscheiders.

Bemerkenswert ist ferner, dass die Nanofaserschicht des erfindungsgemäßen Endabscheiders nur auf einer Seite eines Filterkörpers des Endabscheiders aufgebracht ist. Da die Filterschicht deutlich stabiler ausgestaltet werden kann als die Nanofaserschicht, ergeben sich gute Trägereigenschaften für die Nanofaserschicht, wodurch sich eine erhöhte Stabilität für die Nanofaserschicht erreichen lässt. Ferner lässt sich die Nanofaserschicht relativ einfach auf das Filtermaterial aufbringen, was die Herstellung des Filterkörpers für den Endabscheider vereinfacht.

Der Endabscheider kann eine beliebige Form aufweisen. Vorzugsweise weist der Endabscheider eine rechteckige, runde, ringförmige, ovale oder hufeisenförmige Kontur auf. Ferner weist der Filterkörper bzw. das Filtermaterial eine Porosität auf. Das heißt, dass der Filterkörper Hohlräume wie beispielsweise Poren aufweist, wobei die Porosität das Verhältnis zwischen Hohlraumanteil und Gesamtanteil des Filterkörpers angibt.

Sofern es im vorliegenden Zusammenhang, z.B. für die vorstehend genannten Poren des Filtermaterials (Körperporen) bzw. für die weiter unten genannten Poren der Nanofaserschicht (Nanofaserporen), auf die Porengröße bzw. Porosität ankommt, wird auf herkömmliche porosimetrische Verfahren zur Bestimmung der Porosität bzw. der mittleren Porengröße verwiesen. Bevorzugt kommen jedoch eine Quecksilberporosimetrie oder optische Bildanalyseverfahren, wie z.B. TEM, REM oder LIMI, in Betracht.

Zudem ist der erfindungsgemäße Filterkörper derart ausgebildet, dass die Porosität auf einer ersten Seite des Filterkörpers kleiner ist als auf einer von der ersten Seite abgewandten zweiten Seite des Filterkörpers. Mit anderen Worten: Der Hohlraumanteil des Filterkörpers ist auf der ersten Seite kleiner als auf der zweiten Seite, womit die erste Seite kompakter und insbesondere dichter sowie stabiler ist als die zweite Seite. Bevorzugt ist die Nanofaserschicht auf die erste Seite und somit auf die Seite mit dem kleineren Hohlraumanteil des Filterkörpers aufgebracht. Dies führt einerseits dazu, dass die Nanofaserschicht, insbesondere im Vergleich zu einer Aufbringung auf der zweiten Seite, einen besseren Halt hat bzw. vom Filterkörper besser abgestützt ist. Somit kann die Nanofaserschicht einer stärkeren Strömung und somit Verunreinigungen bzw. Schmutzpartikeln mit einem höheren Impulsen standhalten. Zudem bietet die die kleinere Porosität aufweisende erste Seite bessere Bedingungen zum Aufbringen der Nanofaserschicht, so dass auf dieser Seite ein verbessertes Aufbringen der Nanofaserschicht und/oder das Aufbringen einer solchen Nanofaserschicht mit einer erhöhten Stabilität möglich ist.

Die geringere Porosität der ersten Seite im Vergleich zur zweiten Seite des Filterkörpers bedeutet üblicherweise auch, dass die Dichte des Filterkörpers auf der ersten Seite größer ist als auf der zweiten Seite. Dies gilt insbesondere dann, wenn der Filterkörper lediglich ein solches Filtermaterial aufweist. Der Filterkörper kann jedoch auch zwei oder mehr unterschiedliche Filtermaterialien bzw. Materialzusammensetzungen aufweisen. Hier bedeutet die niedrigere Porosität der ersten Seite nicht zwangsläufig, dass die erste Seite eine höhere Dichte aufweist als die zweite Seite, insbesondere dann, wenn der Filterkörper auf der ersten Seite ein leichteres Filtermaterial bzw. ein Filtermaterial mit einer geringeren Dichte aufweist als auf der zweiten Seite.

Die Porosität des Filterkörpers bedeutet, wie zuvor erwähnt, dass der Filterkörper bzw. das zumindest eine Filtermaterial Hohlräume aufweist. Diese Hohlräume können insbesondere in Form von Poren vorliegen, die nachfolgend als Körperporen bezeichnet werden. Besagte Körperporen können hierbei beliebig im Filterkörper verteilt sein, sofern die erste Seite eine kleinere Porosität aufweist als die zweite Seite. Zudem können die jeweiligen Körperporen unterschiedliche Größen und/oder Formen aufweisen. So können die Körperporen insbesondere als Mikroporen ausgebildet sein, die Dimensionen im ein- bis zweistelligen Mikrometerbereich aufweisen.

Die niedrigere Porosität des Filterkörpers auf der ersten Seite im Vergleich zur zweiten Seite kann beispielsweise dadurch gegeben sein, dass eine Durchschnittsgröße der Körperporen des Filterkörpers an der ersten Seite kleiner ist als die Durchschnittsgröße der Körperporen an der zweiten Seite. Das heißt insbesondere, dass die Körperporen bzw. Hohlräume auf der ersten Seite kleiner sind als auf der zweiten Seite. Alternativ oder zusätzlich kann die Anzahl der Körperporen auf der ersten Seite geringer sein als auf der zweiten Seite. Bei gleichmäßiger Durchschnittsporengröße ist also insbesondere eine Körperporendichte des Filterkörpers auf der ersten Seite kleiner als auf der zweiten Seite.

Die geringere Porosität des Filterkörpers auf der ersten Seite im Vergleich zur zweiten Seite führt dabei bevorzugt dazu, dass die erste Seite glatter bzw. flacher ausgebildet ist als die zweite Seite. Die glattere bzw. flachere Ausbildung der ersten Seite, welche insbesondere zu einer erhöhten Kompaktheit der ersten Seite führen kann, stellt verbesserte Bedingungen für das Aufbringen der Nanofaserschicht auf der ersten Seite dar und/oder stütz die Nanofaserschicht besser ab.

Derartige Poren bzw. Körperporen können beim Filtermaterial auch durch Zwischenräume gebildet sein, wenn es sich beim Filtermaterial um ein Gewebe oder um ein Vlies (non-woven) handelt.

Der erfindungsgemäße Endabscheider kann beliebig in einer zugehörigen Endabscheidereinrichtung angeordnet und von einem zu reinigenden Fluid durchströmt werden. Bevorzugt sind diejenigen Ausführungsformen, bei denen die erste Seite der von dem zu filternden Fluid angeströmten Seite entspricht. Mit anderen Worten: Die erste Seite entspricht im in der Endabscheidereinrichtung angeordneten Zustand einer von dem zu filternden Fluid angeströmten Rohseite der Endabscheidereinrichtung. Dementsprechend kann die zweite Seite einer Reinseite entsprechen, aus der das gefilterte Filtermedium ausströmt. In diesem Fall kann aufgrund der niedrigeren Porosität der ersten Seite, insbesondere wenn die erste Seite eine im Vergleich zur zweiten Seite höhere Dichte aufweist, von einem Oberflächenfilter gesprochen werden, bei dem das Filtern des Fluids vorwiegend auf der ersten Seite stattfindet. Das heißt, dass die Schmutzpartikel bzw. Verunreinigungen des zu filternden Fluids vorwiegend auf der ersten Seite bzw. im Bereich der ersten Seite aus dem Fluid gefiltert bzw. ausgeschieden werden und sich hier absetzen. Dementsprechend kann der Endabscheider zum Beispiels mittels Rückspülung dadurch gereinigt werden, dass es von einem Fluid mit umgekehrter Strömungsrichtung durchströmt wird. Dieses Fluid, das als Reinigungsfluid bezeichnet werden kann, strömt also an der ersten Seite aus dem Endabscheider aus, so dass besagte Verunreinigungen bzw. Schmutzpartikel aus dem Endabscheider herausgespült werden können. Damit ist es möglich, die Lebensdauer des Endabscheiders zu erhöhen bzw. eine Filterwirkung des Endabscheiders zu verbessern.

Selbstverständlich ist es auch möglich, den Endabscheider derart in der zugehörigen Endabscheidereinrichtung anzuordnen, dass es als ein Tiefenfilter fungiert, bei dem die erste Seite der Reinseite entspricht, während die zweite Seite der Rohseite entsprechen kann. In diesem Fall ist jedoch besagte Reinigung mittels Rückspülung erschwert.

Die niedrigere Porosität des Filterkörpers auf der ersten Seite im Vergleich zur zweiten Seite kann insbesondere dadurch gegeben sein, dass die Porosität entlang des Filterkörpers, insbesondere entlang einer Durchströmungsrichtung des zu filternden Fluids, variiert. Hierbei sind prinzipiell sämtliche Variationen innerhalb des Filterkörpers vorstellbar, sofern die Porosität auf der ersten Seite kleiner ist als auf der zweiten Seite. So kann die Porosität des Filterkörpers von der ersten Seite hin zur zweiten Seite zumindest bereichsweise stufenartig zunehmen. Dies kann insbesondere dadurch bedingt sein, dass der Filterkörper aus zwei oder mehreren Filtermaterialien mit unterschiedlichen Porositäten mehrschichtig oder mehrlagig hergestellt ist. Hierbei ist es insbesondere vorstellbar, dass die Porosität des Filterkörpers innerhalb des Filterkörpers größer ist als auf der zweiten Seite. Ferner kann die Porosität des Filterkörpers innerhalb des Filterkörpers kleiner sein als auf der ersten Seite. Die stufenartige Änderung der Porosität des Filterkörpers ist beispielsweise durch eine entsprechende stufenartige Änderung der Durchschnittsgröße und/oder Anzahl der Körperporen des Filterkörpers von der ersten Seite hin zur zweiten Seite gegeben. Auch kann die stufenartige Änderung der Porosität durch Zugabe von Filterpartikeln in den Filterkörper bedingt sein, wobei als Beispiel für derartige Filterpartikel auf Kohlepartikel bzw. Aktivkohlepartikel hingewiesen wird. Auch kann die stufenartige Änderung der Porosität des Filterkörpers von der Herstellung des Filterkörpers abhängen. So ist es vorstellbar, dass der Filterkörper aus den gleichen oder unterschiedlichen Filtermaterialien in zwei oder mehreren Schritten hergestellt wird, wobei der jeweilige Übergang zwischen den Herstellungsschritten zu einer solchen stufenartigen Variation der Porosität des Filterkörpers führt.

Alternativ kann die Porosität des Filterkörpers von der ersten Seite hin zur zweiten Seite zumindest bereichsweise kontinuierlich variieren. Das heißt, dass die Porosität des Filterkörpers innerhalb des Filterkörpers zumindest bereichsweise graduell ab- oder zunimmt, sofern die Porosität auf der ersten Seite kleiner ist als auf der zweiten Seite.

Eine solche kontinuierliche Änderung der Porosität kann insbesondere mit der Herstellung des Filterkörpers, insbesondere des zumindest einen Filtermaterials, zusammenhängen. Als eine derartige Herstellung kommt beispielsweise ein Sieben oder Schöpfen des Filtermaterials aus dem zugehörigen Filtergrundmaterial in Frage. Hierbei kann das Filtermaterial aus einer das Filtergrundmaterial enthaltenden Filtermaterialflüssigkeit geschöpft bzw. ausgesiebt werden. Bei anderen Ausführungen kann das Filtermaterial aus einem Filtermaterial-Gasgemenge hergestellt sein. Dies kann z. B. durch ein Ablegen des Filtermaterialgemisches auf ein Siebband erfolgen. Bei derartigen Verfahren strömt die Filtermaterialflüssigkeit bzw. Filtermaterial-Gasgemenge insbesondere gravitationsbedingt und/oder durch Unterdruck bzw. Absaugung in einer Richtung, womit sich auf der entsprechenden Seite mehr Filtermaterial ansammeln kann als auf der gegenüberliegenden Seite. Dies führt dazu, dass eine Seite einen höheren Anteil an Filtermaterial aufweist als die andere Seite, was zu unterschiedlichen Porositäten innerhalb des Filtermaterials führt. Hierbei nimmt die Porosität gewöhnlich kontinuierlich ab bzw. zu, wobei die Seite mit der niedrigeren Porosität der ersten Seite des Filterkörpers entspricht. Ein derartiges Verfahren kann auch in nacheinanderfolgenden Schritten erfolgen, was zu einer zuvor erwähnten stufenartigen Änderung der Porosität des Filterkörpers führen kann. Eine solche stufenartige Änderung der Porosität kann auch dadurch gegeben sein, dass der Filterkörper zwei oder mehrere Filtermaterialien mit unterschiedlichen Porositäten aufweist, wobei die Porosität innerhalb der jeweiligen Filtermaterialien insbesondere wie oben beschrieben variieren oder gleichmäßig bzw. konstant sein kann.

Grundsätzlich kann der Filterkörper aus einem beliebigen solchen Filtermaterial hergestellt sein und/oder eine beliebige Größe und/oder Form aufweisen. So kann der Filterkörper durch Falten hergestellt und/oder asymmetrisch ausgebildet sein. Auch kann der Filterkörper, insbesondere das Filtermaterial imprägniert sein und/oder eine glatte, genockte, genoppte oder rillierte Struktur aufweisen. Weist der Filterkörper eine rillierte Struktur auf, so weisen die jeweiligen Rillen eine beliebige Tiefe auf, wobei Ausführungsformen bevorzugt sind, bei denen die Rillentiefe größer als 0,4 mm ist. Hierbei ist die Reihenfolge der einzelnen Arbeitsschritte zueinander bei der Gestaltung des Filterkörpers bzw. des jeweiligen Filtermaterials beliebig.

Bei bevorzugten Ausführungsformen ist der Filterkörper aus einem faserhaltigen Material hergestellt. Das heißt insbesondere, dass das zumindest eine Filtermaterial dem faserhaltigen Material entspricht. Ein derartiger Filterkörper ist vorzugsweise mit besagtem Verfahren aus einer zugehörigen Filtermaterialflüssigkeit geschöpft bzw. gesiebt. Alternativ kann der Filterkörper aus einem Filtermaterial hergestellt sein, welches als flächiges Bahnenmaterial ausgebildet ist und plissiert werden kann. Ein derartiges Bahnenmaterial ist typischerweise als Rollenware für die Filterproduktion erhältlich. Das faserhaltige Filtermaterial kann somit gewoben, also als Gewebe, oder ungewoben, also als Vlies, ausgestaltet sein.

Hierbei können beliebige faserhaltige Materialien zum Einsatz kommen, wobei der Filterkörper bzw. das Filtermaterial bei besonders bevorzugten Ausführungsformen aus einem zellulosehaltigen Material hergestellt ist bzw. das zumindest eine Filtermaterial einem zellulosehaltigen Material entspricht. Es sind jedoch auch Ausführungsformen vorstellbar, bei denen der Filterkörper aus einem Fasergemisch aus Zellulose und/oder synthetischen Fasern hergestellt ist. Alternativ oder zusätzlich kann der Filterkörper bzw. das Filtermaterial auch Glasfaser und dergleichen aufweisen bzw. aus Glasfasern hergestellt sein. Gemäß weiteren Ausgestaltungen kann das Filtermaterial aus einem Polymerschaum gebildet sein.

Die vorstehend beschriebenen Filtermaterialien können neben dem Grundmaterial auch über Beimengungen anderer Stoffe verfügen. Die Beimengungen können als Fasern oder Partikel ausgeführt sein, wobei die Beimengungen aus Kunststoff, Glas, Grafit, Ceolite oder mineralischen Stoffen bestehen können. Bei einem aus dem faserhaltigen Material hergestellten Filterkörper bzw. bei einem faserhaltigen Filtermaterial hat das Aufbringen der Nanofaserschicht auf der ersten Seite insbesondere den Vorteil, dass auf dieser Seite eine im Vergleich zur zweiten Seite niedrigere Anzahl von Faserenden des Filterkörpers vorhanden ist. Bei diesen Faserenden handelt es sich dabei insbesondere um freie Faserenden, die zu einer Schädigung der Nanofaserschicht führen, indem sie beispielsweise in die Nanofaserschicht eindringen bzw. diese durchdringen. Dem wird also vorzugsweise entgegengewirkt, indem die Nanofaserschicht auf die Seite des Filterkörpers mit der niedrigeren Porosität, also auf der ersten Seite, und dementsprechend mit der verringerten Anzahl von Faserenden aufgebracht wird.

Zur Reduzierung der Faserenden kann das Filtermaterial, insbesondere auf der ersten Seite, vorzugsweise vor dem Aufbringen der Nanofaserschicht vorbehandelt werden bzw. sein. Eine solche Vorbehandlung kann beispielsweise das Ätzen des faserhaltigen Filtermaterials beinhalten. Alternativ oder zusätzlich kann eine Säurebehandlung erfolgen. Hierbei kann zusätzlich zur Reduzierung der Anzahl der Faserenden eine Abrundung der Fasern und somit eine Milderung bzw. Entschärfung bzw. Entgratung der Ecken und/oder Kanten der Fasern erreicht werden. Auch ein Abflammen bzw. Absengen der Faserenden kann zur Reduzierung der Anzahl von Faserenden beitragen. Eine derartige Vorbehandlung der Faserenden ist am fertigen Filterkörper erkennbar, so dass durch diese Maßnahmen nicht nur das Herstellungsverfahren sondern auch der danach hergestellte Endabscheider gekennzeichnet ist.

Die reduzierte Anzahl von Faserenden kann ebenso dadurch realisiert sein, das an der ersten Seite ein anderes Filtermaterial zum Einsatz kommt als auf der zweiten Seite. Dabei wird das Filtermaterial derart gewählt, dass an der ersten Seite weniger Faserenden vorhanden sind.

Insbesondere kann vorgesehen sein, dass an der ersten Seite ein Filtermaterial verwendet wird, das weichere und stärker abgerundete Fasern, insbesondere Faserenden, aufweist.

Auch kann an der ersten Seite ein Filtermaterial mit Filament verwendet werden. Die Länge eines solchen Filaments hat insbesondere zur Folge, dass die Anzahl der Fasern und somit der Faserenden reduziert ist. Dabei kann ein beliebiges Filament zum Einsatz kommen. Als Beispiele hierfür wird auf Endlosfasern sowie Spunbond verwiesen.

Auch eine geeignete Herstellung des faserhaltigen Filtermaterials kann zur Reduzierung der Anzahl von freien bzw. herausragenden Faserenden beitragen. Hierzu zählt etwa der Einsatz eines Pressvorgangs, um beispielsweise ein Trägerpapier des Filterkörpers bzw. des Filtermaterials die Produktion des Filtermaterials zu behandeln. Dabei wird also ein Filtermaterial mit zumindest einer glatten Seite hergestellt, so dass das Filtermaterial weniger Faserenden bzw. freie Faserenden aufweist. Weiterhin kann bei einem Wickelvorgang während der Herstellung des Filtermaterials, insbesondere der Fasern, eine Trennlage verwendet werden, um eine Beschädigung der Fasern zu vermeiden.

Bei einer weiteren Variante trägt die geeignete Wahl eines Fasermaterials zur Reduzierung der Faserenden bei. Dies kann beispielsweise durch die Wahl eines Fasermaterials erreicht werden, das ein vergleichsweise zähes Harz aufweist.

Ferner ist es vorstellbar, auf der ersten Seite eine faserhaltige Deckschicht aufzubringen, auf der anschließend die Nanofaserschicht aufgebracht wird. Die Deckschicht führt insbesondere dazu, dass die Struktur der ersten Seite insgesamt glatter wird und somit weniger Faserenden aufweist. Die Deckschicht kann hierbei ihrerseits faserhaltig sein, wobei die Fasern der Deckschicht nicht zwingend funktionell ausgestaltet sind und beispielsweise nicht zum Filtervorgang beitragen müssen. Ebenso ist es vorstallbar, dass die Deckschicht faserfrei ist. Bei dieser Variante kann die Deckschicht beispielsweise Lack und/oder Harz und/oder ein Klebemittel enthalten.

Die Nanofaserschicht weist im Allgemeinen eine beliebige Art von Fasern bzw. Nanofasern auf, sofern die jeweiligen Nanofasern der Nanofaserschicht eine entsprechende Dimension und insbesondere einen Durchmesser von bis zu einigen hundert Nanometern, bevorzugt weniger als 500 nm, aufweisen. Ferner ist die Nanofaserschicht bevorzugt auf der gesamten ersten Seite des Filterkörpers aufgebracht; dies muss jedoch nicht zwangsläufig so sein. So sind beispielsweise Ausführungsformen vorstellbar, bei denen mehrere voneinander getrennte bzw. voneinander entfernte Nanofaserschichten auf der ersten Seite des Filterkörpers aufgebracht sind. Hierbei können die jeweiligen voneinander getrennten Nanofaserschichten als Nanofaserteilchen bezeichnet werden, die beliebig auf der ersten Seite verteilt sein können, wobei Ausführungsformen bevorzugt sind, bei denen besagte Nanofaserteilchen homogen bzw. gleichmäßig auf der ersten Seite des Filterkörpers verteilt sind. Alternativ kann auch eine zusammenhängende Nanofaserschicht vorgesehen sein, welche das Filtermaterial in speziellen Bereichen nicht überdeckt. Hierbei können Aussparungen mit beliebiger Kontur oder nanofaserfreie Bereiche an den Rändern des Filterkörpers vorgesehen sein. Ferner können die jeweiligen Nanofaserteilchen eine beliebige Größe und/oder Form aufweisen. Insbesondere weisen die jeweiligen Nanofaserteilchen Größen im zweistelligen Mikrometerbereich auf und sind beispielsweise 50 µm lang und/oder breit.

Die Herstellung der Nanofaserschicht kann in allgemein bekannter Weise erfolgen. Dazu gehören beispielsweise das Elektrospinnen oder das Schmelzspinnen.

Auch die Nanofaserschicht bzw. die Nanofaserpartikel können eine Porosität aufweisen, wobei die Porosität der Nanofaserschicht bevorzugt kleiner ist als die Porosität des Filterkörpers und insbesondere als die Porosität des Filterkörpers auf der ersten Seite. Damit ist es insbesondere möglich, kleinere Verunreinigungen bzw. Schmutzpartikel aus dem zu reinigenden Fluid zu filtern als mit dem Filterkörper.

Die Porosität der Nanofaserschicht kann analog zur Porosität des Filterkörpers durch Poren der Nanofaserschicht gegeben sein, welche nachfolgend als Nanofaserporen bezeichnet werden. Hierbei sind Ausführungsformen bevorzugt, bei denen die Nanofaserporen der Nanofaserschicht kleiner sind als die Körperporen des Filterkörpers.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

### Es zeigen, jeweils schematisch

- Fig. 1: einen Schnitt durch eine Endabscheidereinrichtung mit einem Endabscheider,
- Fig. 2-5: jeweils einen Schnitt durch einen Endabscheider, bei unterschiedlichen Ausführungsformen.

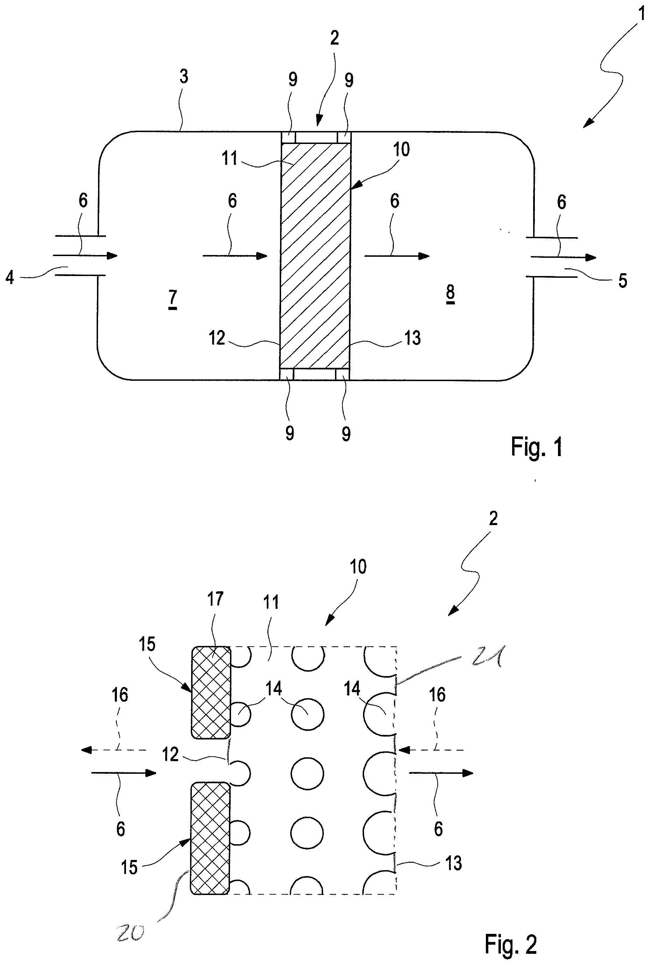

Figur 1 zeigt einen Schnitt durch eine Endabscheidereinrichtung 1, die im Beispiel gleichzeitig als Flüssigkeitsfilter zum Filtern von Kraftstoff oder Öl oder einer anderen Betriebsflüssigkeit, vorzugsweise eines Kraftfahrzeugs, ausgestaltet sein kann. Die Endabscheidereinrichtung 1 dient dabei zum Abtrennen von Wasser, das in der jeweiligen Betriebsflüssigkeit, also z.B. im Öl oder Kraftstoff, mitgeführt wird. Zum Abtrennen des Wassers bzw. Filtern des jeweiligen Fluids weist die Endabscheidereinrichtung 1 einen Endabscheider 2 auf, das in einem Gehäuse 3 der Endabscheidereinrichtung 1 angeordnet ist. Die Endabscheidereinrichtung 1 weist ferner einen Fluideinlass 4 sowie einen Fluidauslass 5 auf, die auf gegenüberliegenden Seiten des Gehäuses 3 ausgebildet sind. Die zu filternde bzw. zu entwässernde Flüssigkeit strömt, wie mit den Pfeilen 6 angedeutet, durch den Fluideinlass 4 in das Gehäuse 3 ein und trifft auf den Endabscheider 2, wo es gefiltert und von Wasseranteilen befreit wird und anschließend über den Fluidauslass 5 aus der Endabscheidereinrichtung 1 gelangt. Somit wird die Endabscheidereinrichtung 1 bzw. das Gehäuse 3 mittels des Endabscheiders 2 in zwei Bereiche aufgeteilt: Der dem Fluideinlass 4 benachbarte Bereich bildet eine Rohseite 7, während der dem Fluidauslass 5 benachbarte Bereich die Reinseite 8 bildet. Der Endabscheider 2 ist mit Hilfe von Haltemitteln 9 im Gehäuse 3 gehalten bzw. fixiert, wobei die Haltemittel 9 fluiddicht ausgestaltet sind, so dass das zu reinigende Fluid lediglich durch den Endabscheider 2 von der Rohseite 7 zur Reinseite 8 gelangen kann. Der Endabscheider 2 weist einen Filterkörper 10 auf, der aus zumindest einem Filtermaterial 11 ausgebildet ist bzw. dieses Filtermaterial 11 aufweist. Zudem ist eine erste Seite 12 des Endabscheiders 2 bzw. des Filterkörpers 10 auf der Rohseite 7 angeordnet bzw. entspricht dieser, während eine von der ersten Seite 12 abgewandte zweite Seite 13 auf der Reinseite 8 angeordnet ist bzw. dieser entspricht. Das heißt, dass das zu filternde Fluid auf der ersten Seite 12 in den Endabscheider 2 bzw. in den Filterkörper 10 einströmt und auf der zweiten Seite 13 aus dem Endabscheider 2 bzw. dem Filterkörper 10 herausströmt, wobei die erste Seite 12 und die zweite Seite 13 des Filterkörpers 10 der ersten Seite 12 bzw. der zweiten Seite 13 des entsprechenden Filtermaterials 11 entspricht.

Die Figuren 2 bis 4 zeigen jeweils einen Schnitt durch ein solchen Endabscheider 2, wobei in den jeweiligen Figuren unterschiedliche Ausführungsformen des Endabscheiders 2 dargestellt sind. Hierbei sind in diesen Figuren die erste Seite 12 sowie die zweite Seite 13 in einem Ausschnitt gezeigt. Dabei ist zu beobachten, dass der Filterkörper 10 bzw. das Filtermaterial 11 Hohlräume bzw. Poren 14 aufweist, die nachfolgend als Körperporen 14 bezeichnet werden, wobei in den jeweiligen Figuren rein exemplarisch kreisförmige Körperporen 14 dargestellt sind. Der Filterkörper 10 bzw. das Filtermaterial 11 weist also eine Porosität auf, die das Verhältnis des Hohlraumanteils bzw. Körperporenanteils zum Gesamtanteil des Filterkörpers 10 bzw. des Filtermaterials 11 angibt. Hierbei ist zu beobachten, dass die Porosität auf der ersten Seite 12 kleiner ist als auf der zweiten Seite 13.

Bei der in der Figur 2 gezeigten Ausführungsform ist die kleinere Porosität auf der ersten Seite 12 im Vergleich zur zweiten Seite 13 dadurch realisiert, dass die Größe der Körperporen 14 bei gleicher Anzahl von der ersten Seite 12 hin zur zweiten Seite 13 kontinuierlich oder in Stufen zunimmt, was zu einer kontinuierlichen oder gestuften Zunahme der Porosität von der ersten Seite 12 hin zur zweiten Seite 13 führt.

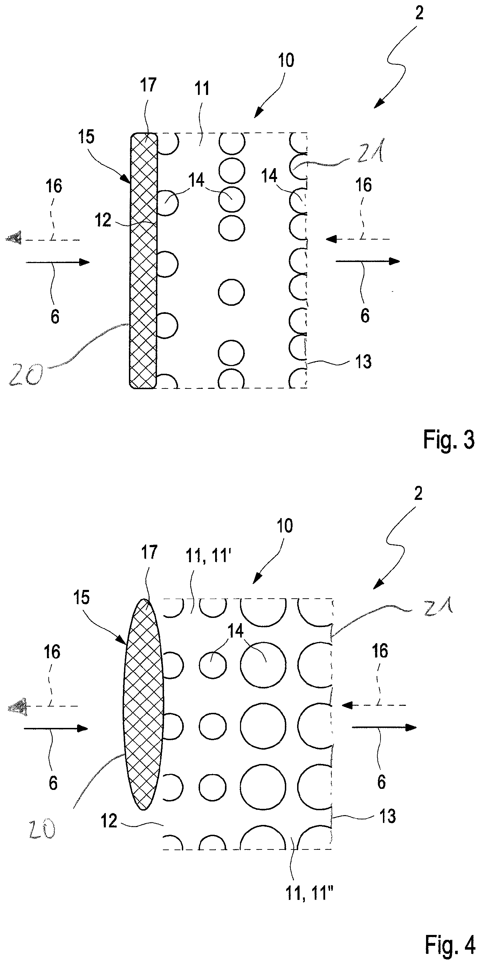

Bei der in Figur 3 gezeigten Ausführungsform sind die jeweiligen Körperporen 14 gleich groß ausgebildet, während die Anzahl der Körperporen 14 von der ersten Seite 12 hin zur zweiten Seite 13 kontinuierlich oder in Stufen zunimmt. Damit nimmt also die Porosität von der ersten Seite 12 hin zur zweiten Seite 13 kontinuierlich oder in Stufen zu.

Bei der in Figur 4 gezeigten Ausführungsform weist der Filterkörper 10 zwei unterschiedlich große Sorten von Körperporen 14 auf. Dabei sind die kleineren Körperporen 14 im Bereich der ersten Seite 12 angeordnet, während die größeren Körperporen 14 im Bereich der zweiten Seite 13 angeordnet sind. Dies kann beispielsweise dadurch bedingt sein, dass der Filterkörper 10 im Bereich der ersten Seite 12 aus einem anderen Filtermaterial 11' hergestellt ist, als im Bereich der zweiten Seite 13, das aus einem anderen Filtermaterial 11" hergestellt ist. Damit weist das im Bereich der ersten Seite 12 vorhandene Filtermaterial 11' kleinere Körperporen 14 auf, während das andere Filtermaterial 11", welches im Bereich der zweiten Seite 13 angeordnet ist, größere Körperporen 14 aufweist. Somit ist die Porosität auch hier auf der ersten Seite 12 kleiner als auf der zweiten Seite 13.

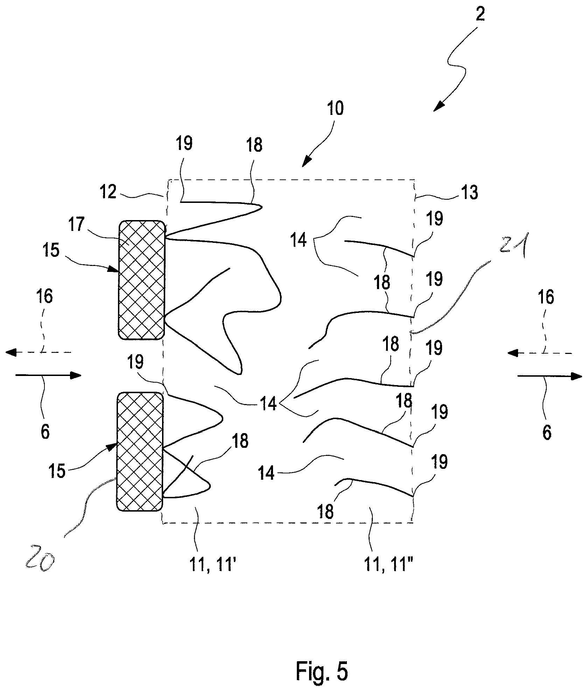

Figur 5 zeigt ein weiteres Ausführungsbeispiel, bei dem auf der ersten Seite 12 und auf der zweiten Seite 13 unterschiedliche Filtermaterialen 11', 11" zum Einsatz kommen. Beide Filtermaterialien 11', 11" weisen hierbei Fasern 18 auf, wobei das Filtermaterial 11' an der erste Seite 12 weniger freie Faserenden 19 aufweist als das Filtermaterial 11" an der zweiten Seite 13. Dies führt auch dazu, dass die Porosität bzw. die Anzahl der Körperporen 14 an der ersten Seite 12 11 kleiner als an der zweiten Seite 13 ist.

Die kleinere Porosität des Filterkörpers 10 auf der ersten Seite 13 im Vergleich zur zweiten Seite 13 führt insgesamt dazu, dass die erste Seite 12 glatter bzw. flacher sowie stabiler ausgebildet ist als die zweite Seite 13. Mit anderen Worten: Die Oberfläche der ersten Seite 12 ist glatter bzw. flacher sowie stabiler als die Oberfläche der zweiten Seite 13.

Ferner ist auf der ersten Seite 12 zumindest bereichsweise eine Nanofaserschicht 15 aufgebracht. Dies hat den Vorteil, dass die Nanofaserschicht 15 auf der ersten Seite 12, welche die niedrigere Porosität aufweist, eine glattere bzw. flachere Oberfläche vorfindet, so dass sie einfacher auf der ersten Seite 12 aufgebracht werden kann. Zudem wird die Nanofaserschicht 15 auf der ersten Seite 12 besser abgestützt, so dass sie belastbarer ist. Das heißt, dass die Nanofaserschicht 15 höheren Strömungsgeschwindigkeiten des zu filternden Fluids standhalten kann. Damit ist die Nanofaserschicht 15 auch mechanisch belastbarer, so dass die Verunreinigungen bzw. Schmutzpartikeln des zu reinigenden Fluids mit höheren Impulsen auf die Nanofaserschicht 15 auftreffen können, ohne diese zu beschädigen oder zu zerstören.

Die Nanofaserschicht 15 sowie das Filtermaterial 11 dienen dem Entwässern und hier gleichzeitig dem Filtern des zu reinigenden Fluids. Bei der gezeigten Anordnung des Filterkörpers 10 der Endabscheidereinrichtung 1 findet das Entwässern bzw. Filtern des Fluides aufgrund der Anordnung der Nanofaserschicht 15 bzw. der niedrigeren Porosität der ersten Seite 12 vorwiegend im Bereich der ersten Seite 12 statt, so dass die Schmutzpartikel des Fluids bzw. die Verunreinigungen des Fluids vorwiegend im Bereich der ersten Seite 12 abgeschieden werden. Bei der gezeigten Anordnung des Filterkörpers 10 kann der Endabscheider 2 also auch als Oberflächenfilter bezeichnet werden. Dabei ist es möglich, den Endabscheider 2 zu reinigen, indem der Endabscheider 2 mit einem Reinigungsfluid gereinigt wird, das den Endabscheider 2 in zur Strömungsrichtung 6 entgegengesetzter Richtung 16 durchströmt. Damit ist es möglich, die im Bereich der ersten Seite 12 abgeschiedenen Schmutzpartikel bzw. Verunreinigungen des zu reinigenden Fluids aus dem Endabscheider 2 hinaus zu spülen. Hierdurch wird die Lebensdauer des Endabscheiders 2 erhöht und/oder die Filterwirkung bzw. Wirkungsgrad des Endabscheiders 2 verbessert. Gleichzeitig kann dadurch auch die Abscheidewirkung dauerhaft aufrechterhalten bzw. verbessert werden.

Die Nanofaserschicht 15 weist Nanofasern auf, die üblicherweise Durchmesser von einigen hundert Nanometern oder weniger aufweisen. Hierbei ist die erste Seite 12 zumindest bereichsweise mit der Nanofaserschicht 15 bedeckt. Die in Figur 3 gezeigte Ausführungsform zeigt eine Variante, bei der im gezeigten Ausschnitt eine solche Nanofaserschicht 15 aufgebracht ist, die eine vollflächige Überdeckung des Filtermaterials 11 aufweist. Bei den in den Figuren 2 und 5 gezeigten Ausführungsformen sind hingegen zwei solche Nanofaserschichten 15 gezeigt, die voneinander beabstandet auf der ersten Seite 12 aufgebracht sind und die Oberfläche des Filterkörpers 10 bzw. des Filtermaterials 11 segmentartig überdecken. Figur 4 zeigt ebenfalls eine solche Nanofaserschicht 15, welche die Oberfläche des Filterkörpers 10 nur in einem Teilbereich überdeckt, wobei der Randbereich des Filterkörpers 10 nicht von der Nanofaserschicht 15 überdeckt ist.

Die jeweilige Nanofaserschicht 15 weist ebenfalls eine Porosität auf, die durch in der Nanofaserschicht 15 angeordnete Poren 17, die nachfolgend als Nanofaserporen 17 bezeichnet werden, bedingt ist. Hierbei weist die jeweilige Nanofaserschicht 15 in den gezeigten Ausführungsformen rein exemplarisch eine konstante Porosität auf, wobei auch Nanofaserschichten 15 mit variierenden Porositäten zum Einsatz kommen können. Zu beobachten ist ferner, dass die Nanofaserporen 17 der jeweiligen Nanofaserschicht 15 kleiner sind als die Körperporen 14 des Filterkörpers 10. Somit weisen die jeweiligen Nanofaserschichten 15 eine kleinere Porosität auf als die zugehörigen Filterkörper 10. Damit ist es insbesondere möglich, mit Hilfe der Nanofaserschicht 15 kleinere Schmutzpartikel aus dem zu filternden Fluid abzuscheiden als mit dem Filterkörper 10.

Die jeweilige Nanofaserschicht 15 kann aus einem beliebigen Material hergestellt sein. Auch kann der jeweilige Filterkörper 10 aus einem beliebigen Filtermaterial 11 bzw. beliebigen unterschiedlichen Filtermaterialien 11 hergestellt sein. Der Filterkörper 10 kann insbesondere aus einem faserhaltigen Filtermaterial 11 hergestellt sein. Beispielsweise hierfür sind zellulosehaltige Filtermaterialien 11 und/oder ein Fasergemisch aus Zellulose und synthetischen Fasern 18 und/oder Glasfasern 18.

Erfindungsgemäß ist nun eines von Filtermaterial 11 und Nanofaserschicht 15 hydrophob ausgestaltet, während das jeweils andere weniger hydrophob ausgestaltet ist. Bevorzugt ist die erste Seite 12, die im in der Endabscheidereinrichtung 1 angeordneten Zustand des Endabscheiders 2 der von dem zu filternden Fluid angeströmten Rohseite 7 entspricht, hydrophob ausgestaltet. In den gezeigten Beispielen ist somit die Nanofaserschicht 15 hydrophob ausgestaltet, die im Einbauzustand die Rohseite 7 des Filterkörpers 10 bildet. Das Filtermaterial 11 ist weniger hydrophob ausgestaltet.

Die hydrophobe Ausgestaltung der Nanofaserschicht 15 kann durch eine entsprechende chemische Vorbehandlung der Nanofasern bzw. der Nanofaserschicht 15 realisiert sein oder gemäß den Fig. 2 bis 5 mittels einer hydrophoben Beschichtung 20 der Nanofaserschicht 15 hergestellt sein. Die hydrophobe Ausgestaltung der Nanofaserschicht 15 kann alternativ oder zusätzlich durch eine Behandlung der Nanofaserschicht 15 mit Plasma realisiert sein. Die hydrophobe Ausgestaltung des Filtermaterials 11 kann durch eine entsprechende chemische Vorbehandlung des Filtermaterials 11 bzw. der Fasern 18, aus denen das Filtermaterial 11 hergestellt ist, realisiert sein oder gemäß den Fig. 2 bis 5 mittels einer hydrophoben Beschichtung 21 des Filtermaterials 11 hergestellt sein.

## Patentansprüche

1. Endabscheider (2) für eine Endabscheidereinrichtung (1) zum Abtrennen von Wasser aus einer von Wasser verschiedenen Flüssigkeit, insbesondere aus einem Öl- oder Kraftstoffstrom, mit einem für die Flüssigkeit durchströmbaren Filterkörper (10), der zumindest ein für die Flüssigkeit durchströmbares Filtermaterial (11) aufweist, wobei
- der Filterkörper (10) eine erste Seite (12) und eine von der ersten Seite (12) abgewandte zweite Seite (13) aufweist,
- auf der ersten Seite (12) zumindest bereichsweise eine Nanofaserschicht (15) aus Nanofasern aufgebracht ist,
- zumindest die Nanofaserschicht (15) hydrophob ausgestaltet ist, **dadurch gekennzeichnet,**
- **dass** die Nanofaserschicht derart behandelt ist, dass die Nanofaserschicht durch eine Aktivierung mit der hydrophoben Eigenschaft zu versehen oder die hydrophobe Eigenschaft der Nanofaserschicht erhöht wird,
- **dass** eine Porosität des Filterkörpers (10) auf der ersten Seite (12) kleiner ist als auf der zweiten Seite (13).

2. Endabscheider nach Anspruch 1,
**dadurch gekennzeichnet,**
**dass** eine Durchschnittsgröße von Körperporen (14) des Filterkörpers (10) an der ersten Seite (12) kleiner ist als die Durchschnittsgröße der Körperporen (14) an der zweiten Seite.

3. Endabscheider nach Anspruch 1 oder 2,
**dadurch gekennzeichnet,**
**dass** die Porosität des Filterkörpers (10) von der ersten Seite (12) hin zur zweiten Seite (13) zumindest bereichsweise stufenartig zunimmt.

4. Endabscheider nach einem der Ansprüche 1 bis 3,
**dadurch gekennzeichnet,**
**dass** der Filterkörper (10) aus einem faserhaltigen Filtermaterial (11) hergestellt ist.

5. Endabscheider nach einem der Ansprüche 1 bis 4,
**dadurch gekennzeichnet,**
**dass** der Filterkörper (10) aus einem zellulosehaltigen Filtermaterial (11) hergestellt ist.

6. Endabscheider nach einem der Ansprüche 1 bis58,
**dadurch gekennzeichnet,**
**dass** die auf der ersten Seite (12) aufgebrachte Nanofaserschicht (15) eine kleinere Porosität aufweist als die erste Seite (12) des Filterkörpers (10).

7. Endabscheider nach Anspruch 6,
**dadurch gekennzeichnet,**
**dass** Nanofaserporen (17) der Nanofaserschicht (15) kleiner sind als die Körperporen (14) des Filterkörpers (10).

8. Endabscheider nach einem der Ansprüche 3 bis 7,
**dadurch gekennzeichnet,**
**dass** eine Anzahl von Faserenden (19) an der ersten Seite (12) kleiner ist an der zweiten Seite (13).

9. Endabscheider nach Anspruch 8,
**dadurch gekennzeichnet,**
**dass** die Anzahl der Faserenden (19) an der ersten Seite (12) durch die Verwendung eines anderen Filtermaterials (11) als an der zweiten Seite reduziert ist.

10. Endabscheider nach einem der Ansprüche 1 bis 9,
**dadurch gekennzeichnet,**
**dass** das Filtermaterial (11) an der ersten Seite (12) Filament, insbesondere Endlosfaser, aufweist.

11. Endabscheider nach einem der Ansprüche 1 bis 10,
**dadurch gekennzeichnet,**
**dass** die Nanofasern zum Aktivieren der hydrophoben Eigenschaft mit Plasma behandelt ist.

12. Endabscheider nach einem der Ansprüche 1 bis 11,
**dadurch gekennzeichnet,**
**dass** der Endabscheider (15) eine Rillierung aufweist.

13. Verwendung eines Endabscheiders (2) nach einem der Ansprüche 1 bis 12 als Filter zum Abscheiden von Verunreinigungen aus einer von Wasser verschiedenen Flüssigkeit, insbesondere aus einem Öl- oder Kraftstoffstrom.

14. Endabscheidereinrichtung (1) zum Abtrennen von Wasser aus einer von Wasser verschiedenen Flüssigkeit, insbesondere aus einem Öl- oder Kraftstoffstrom,
- mit einem Gehäuse (3), das einen Fluideinlass (4) und einen Fluidauslass (5) aufweist,
- mit einem Endabscheider (2) nach einem der Ansprüche 1 bis 12, das im Gehäuse (3) angeordnet ist und darin eine mit dem Fluideinlass (4) verbundene Rohseite (7) von einer mit dem Fluidauslass (56) verbundenen Reinseite (8) trennt.

15. Verfahren zum Herstellen eines Endabscheiders (2) für eine Endabscheidereinrichtung (1) zum Abtrennen von Wasser aus einer von Wasser verschiedenen Flüssigkeit, insbesondere aus einem Öl- oder Kraftstoffstrom,
- wobei der Endabscheider (2) einen für die Flüssigkeit durchströmbaren Filterkörper (10) aufweist, der zumindest ein für die Flüssigkeit durchströmbares Filtermaterial (11) aufweist,
- wobei der Filterkörper (10) eine erste Seite (12) und eine von der ersten Seite (12) abgewandte zweite Seite (13) aufweist,
- wobei auf der ersten Seite (12) zumindest bereichsweise eine Nanofaserschicht (15) aus Nanofasern aufgebracht wird,
- wobei zumindest die Nanofaserschicht (15) hydrophob ausgestaltet wird,
**dadurch gekennzeichnet,**
- **dass** der Filterkörper (10) so hergestellt wird, dass er auf der ersten Seite (12) eine kleinere Porosität aufweist als auf der zweiten Seite (13),
- **dass** die hydrophobe Ausgestaltung der Nanofaserschicht (15) dadurch erfolgt, dass die Nanofaserschicht durch eine Aktivierung mit der hydrophoben Eigenschaft zu versehen oder die hydrophobe Eigenschaft der Nanofaserschicht erhöht wird.

16. Verfahren nach Anspruch 15,
**dadurch gekennzeichnet,**
**dass** die Nanofasern zum Aktivieren der hydrophoben Eigenschaft mit Plasma behandelt werden.

## Claims

1. Final separator (2) for a final separator device (1) for separating water from a liquid that differs from water, in particular from an oil or fuel flow, comprising a filter body (10) through which the liquid can flow, which has at least one filter material (11) through which the liquid can flow, wherein
- the filter body (10) has a first side (12) and a second side (13) facing away from the first side (12),
- a nanofibre layer (15) is applied to the first side (12) at least in some regions,
- at least the nanofibre layer (15) is configured to be hydrophobic,
**characterized in**
- **that** the nanofibre layer is treated such that the hydrophobic property is provided or increased in the nanofiber layer by way of an activation,
- **that** a porosity of the filter body (10) on the first side (12) is smaller than on the second side (13).

2. The final separator according to claim 1, **characterized in that** an average size of body pores (14) of the filter body (10) on the first side (12) is smaller than the average size of the body pores (14) on the second side.

3. The final separator according to claim 1 or 2, **characterized in that** the porosity of the filter body (10) increases from the first side (12) towards the second side (13) in a stepped manner at least in some regions.

4. The final separator according to any one of claims 1 to 3, **characterized in that** the filter body (10) is manufactured from a fibrous filter material (11).

5. The final separator according to any one of claims 1 to 4, **characterized in that** the filter body (10) is manufactured from a cellulose-containing filter material (11).

6. The final separator according to any one of claims 1 to 5, **characterized in that** the nanofibre layer (15) applied to the first side (12) has a lower porosity that the first side (12) of the filter body (10).

7. The final separator according to claim 6, **characterized in that** the nanofibre pores (17) of the nanofibre layer (15) are smaller than the body pores (14) of the filter body (10).

8. The final separator according to any one of claims 3 to 7, **characterized in that** a number of fibre ends (19) on the first side (12) is smaller than on the second side (13).

9. The final separator according to claim 8, **characterized in that** the number of fibre ends (19) on the first side (12) is reduced by using a different filter material (11) than on the second side.

10. The final separator according to any one of claims 1 to 9, **characterized in that** the filter material (11) on the first side (12) comprises filament, in particular endless fibre.

11. The final separator according to any one of claims 1 to 10, **characterized in that** the nanofibre layer (15) is treated with plasma to configure the hydrophobic property.

12. The final separator according to any one of claims 1 to 11, **characterized in that** the final separator (15) has a fluting.

13. Use of a final separator (2) according to any one of claims 1 to 12 as a filter for separating impurities from a liquid which differs from water, in particular from an oil or fuel flow.

14. A final separator device (1) for separating water from a liquid which differs from water, in particular from an oil or fuel flow,
- comprising a housing (3) which has a fluid inlet (4) and a fluid outlet (5),
- comprising a final separator (2) according to any one of claims 1 to 12, which is arranged in the housing (3) and therein separates a raw side (7) connected to the fluid inlet (4) from a clean side (8) connected to the fluid outlet (56).

15. Method for producing a final separator (2) for a final separator device (1) for separating water from a liquid which differs from water, in particular from an oil or fuel flow,
- wherein the final separator (2) comprises a filter body (10) through which the liquid can flow, which comprises at least one filter material (11) through which the liquid can flow,
- wherein the filter body (10) has a first side (12) and a second side (13) facing away from the first side (12),
- wherein a nanofibre layer (15) of nanofibres is applied to the first side (12) at least in some regions,
- wherein at least the nanofibre layer (15) is configured to be hydrophobic, **characterized in**
- **that** the filter body (10) is manufactured so that it has a lower porosity on the first side (2) than on the second side (13),
- **that** the hydrophobic configuration of the nanofibre layer (15) is accomplished by providing or increasing the hydrophobic property in the nanofiber layer by way of an activation.

16. The method according to claim 15, **characterized in that** the nanofibres are plasma treated to activate the hydrophobic property.

## Revendications

1. Séparateur terminal (2) pour un dispositif à séparateur terminal (1) destiné à séparer l'eau d'un liquide différent de l'eau, en particulier d'un flux d'huile ou de carburant, avec un corps de filtre (10) qui peut être traversé par le liquide et qui comporte au moins un matériau de filtrage (11) qui peut être traversé par le liquide,
- dans lequel le corps de filtre (10) comporte un premier côté (12) et un second côté (13) éloigné du premier côté (12),
- dans lequel une couche de nanofibres (15) composée de nanofibres est appliquée au moins en partie sur le premier côté (12),
- dans lequel au moins la couche de nanofibres (15) est réalisée hydrophobe, **caractérisé en ce que**
- la couche de nanofibres est traitée de telle sorte que la couche de nanofibres est munie de la propriété hydrophobe par une activation ou que la propriété hydrophobe de la couche de nanofibres est accrue,
- une porosité du corps de filtre (10) est plus petite sur le premier côté (12) que sur le second côté (13).

2. Séparateur terminal selon la revendication 1, **caractérisé en ce qu'**une dimension moyenne de pores de corps (14) du corps de filtre (10) au niveau du premier côté (12) est plus petite que la dimension moyenne des pores de corps (14) au niveau du second côté.

3. Séparateur terminal selon la revendication 1 ou 2, **caractérisé en ce que** la porosité du corps de filtre (10) augmente au moins en partie graduellement du premier côté (12) au second côté (13).

4. Séparateur terminal selon l'une quelconque des revendications 1 à 3, **caractérisé en ce que** le corps de filtre (10) est fabriqué en un matériau de filtrage (11) contenant des fibres.

5. Séparateur terminal selon l'une quelconque des revendications 1 à 4, **caractérisé en ce que** le corps de filtre (10) est fabriqué en un matériau de filtrage (11) contenant de la cellulose.

6. Séparateur terminal selon l'une quelconque des revendications 1 à 58, **caractérisé en ce que** la couche de nanofibres (15) appliquée sur le premier côté (12) présente une plus petite porosité que le premier côté (12) du corps de filtre (10).

7. Séparateur terminal selon la revendication 6, **caractérisé en ce que** des pores de nanofibres (17) de la couche de nanofibres (15) sont plus petits que les pores de corps (14) du corps de filtre (10).

8. Séparateur terminal selon l'une quelconque des revendications 3 à 7, **caractérisé en ce que** le nombre d'extrémités (19) de fibres est plus petit du premier côté (12) que du second côté (13).

9. Séparateur terminal selon la revendication 8, **caractérisé en ce que** le nombre des extrémités de fibres (19) du premier côté (12) est réduit par l'utilisation d'un autre matériau de filtrage (11) que du second côté.

10. Séparateur terminal selon l'une quelconque des revendications 1 à 9, **caractérisé en ce que** le matériau de filtrage (11) du premier côté (12) comporte des filaments, en particulier des fibres sans fin.

11. Séparateur terminal selon l'une quelconque des revendications 1 à 10, **caractérisé en ce que** les nanofibres sont traitées avec du plasma en vue de l'activation de la propriété hydrophobe.

12. Séparateur terminal selon l'une quelconque des revendications 1 à 11, **caractérisé en ce que** le séparateur terminal (15) présente un rainurage.

13. Utilisation d'un séparateur terminal (2) selon l'une quelconque des revendications 1 à 12 comme filtre destiné à séparer des impuretés d'un liquide différent de l'eau, en particulier d'un flux d'huile ou de carburant.

14. Dispositif à séparateur terminal (1) destiné à séparer l'eau d'un liquide différent de l'eau, en particulier d'un flux d'huile ou de carburant,
- avec un carter (3), qui comporte une entrée de fluide (4) et une sortie de fluide (5),
- avec un séparateur terminal (2) selon l'une quelconque des revendications 1 à 12, qui est agencé dans le carter (3) et qui sépare à l'intérieur de celui-ci un côté produit brut (7) relié à l'entrée de fluide (4) et un côté produit pur (8) relié à la sortie de fluide (56).

15. Procédé de fabrication d'un séparateur terminal (2) pour un dispositif à séparateur terminal (1) destiné à séparer l'eau d'un liquide différent de l'eau, en particulier d'un flux d'huile ou de carburant,
- dans lequel le séparateur terminal (2) comporte un corps de filtre (10) qui peut être traversé par le liquide et qui comporte au moins un matériau de filtrage (11) qui peut être traversé par le liquide,
- dans lequel le corps de filtre (10) comporte un premier côté (12) et un second côté (13) éloigné du premier côté (12),
- dans lequel une couche de nanofibres (15) composée de nanofibres est appliquée au moins en partie sur le premier côté (12),
- dans lequel au moins la couche de nanofibres (15) est réalisée hydrophobe, **caractérisé en ce que**
- le corps de filtre (10) est fabriqué de telle sorte qu'il présente sur le premier côté (12) une plus petite porosité que sur le second côté (13),
- la réalisation hydrophobe de la couche de nanofibres (15) s'effectue de telle sorte que la couche de nanofibres est munie de la propriété hydrophobe par une activation ou que la propriété hydrophobe de la couche de nanofibres est accrue.

16. Procédé selon la revendication 15, **caractérisé en ce que** les nanofibres sont traitées avec du plasma en vue de l'activation de la propriété hydrophobe.
